# EUROPEAN PATENT APPLICATION

(11) **EP 4 641 213 A1**
(43) Date of publication of application: **29.10.2025**
(21) Application number: 23906395.1
(22) Date of filing: 19.09.2023
(51) Int. Cl.: G01N 35/04, B65G 54/02

(54) **SAMPLE CARRIER, CONVEYANCE DEVICE, AND METHOD FOR CONVEYING SAMPLE CARRIER**

(30) Priority: 23.12.2022 JP 2022207612
(71) Applicant: HITACHI HIGH-TECH CORPORATION, Tokyo 105-6409 (JP)
(72) Inventor: AZUMA Shinji, Tokyo 105-6409 (JP); YANO Shigeru, Tokyo 105-6409 (JP); WATANABE Hiroshi, Tokyo 105-6409 (JP)
(74) Representative: MERH-IP Matias Erny Reichl Hoffmann Patentanwälte PartG mbB
(86) International application number: PCT/JP2023/033987
(87) International publication number: WO 2024/135020

(57) **Abstract**

Sample carriers 100, 100A, and 100B, that grip a sample container containing a sample and is conveyed by electromagnetic force, each include a magnetic body 105, and an elastic body 104 interposed between the magnetic body 105 and each of holder bottom parts 102, 102A, and 102B of the sample carriers 100, 100A, and 100B and supporting the magnetic body 105, wherein the magnetic body 105 is vertically movable by the elastic body 104. Accordingly, there are provided a sample carrier, a conveyance device and a method for conveying a sample carrier capable of reducing vibration of the sample carrier that occurs when the sample carrier is stopped compared to the prior art.

## Description

### Technical Field

The present invention relates to a sample carrier used for conveying a sample, a conveyance device, and a method for conveying a sample carrier.

### Background Art

As an example of a laboratory sample distribution system and a corresponding operation method, which are highly flexible and provide high conveyance performance, PTL 1 discloses a laboratory sample distribution system including: several sample carriers, each of which includes at least one magnetically active device, preferably at least one permanent magnet, and which carries a sample container; a conveying plane to carry the sample carrier; and several electro-magnetic actuators stationary arranged below the conveying plane, which move the sample carrier on top of the conveying plane by applying magnetic force to the sample carrier.

As an example of a sample carrier and a sample conveyance device capable of reducing frictional force generated between the sample carrier and a conveying plane during conveyance of the sample carrier as compared with the related art, PTL 2 discloses that, in a conveyance device, a sample carrier includes a magnetic body, a gripping part that supports a sample container, and a rotating body that is in contact with a conveyance surface for conveying the sample carrier and rotates as the sample carrier moves, and the sample carrier is conveyed by electromagnetic force acting on the magnetic body.

### Citation List

### Patent Literature

PTL 1: JP2017-77971A
PTL 2: WO2022/079976

### Summary of Invention

### Technical Problem

As medical care becomes more advanced, importance of sample analysis is increasing. To improve analysis processing capability, there is a demand for high-speed sample conveyance, simultaneous large-volume conveyance, and conveyance in a plurality of directions.

As a part of such a technique, there is a technique described in PTLs 1 and 2 described above.

However, in PTL 1, since the permanent magnet held by the sample carrier is attracted to an iron core of the electro-magnetic actuator, there is a problem that vibration at the time of stopping the sample carrier increases, and improvement is desired.

Similarly, in the conveyance device in PTL 2, the rotating body is provided at a bottom of the sample carrier, and thus vibration at the time of stopping becomes more remarkable, and thus improvement is desired.

Therefore, the invention provides a sample carrier, a conveyance device, and a method for conveying a sample carrier capable of reducing vibration of the sample carrier that occurs when the sample carrier is stopped as compared with the related art.

### Solution to Problem

The invention includes a plurality of units to solve the above-mentioned problems, and one example of this is a sample carrier that grips a sample container containing a sample and is conveyed by electromagnetic force, and the sample carrier includes: a magnetic body; and an elastic body interposed between the magnetic body and a casing of the sample carrier and supporting the magnetic body, and the magnetic body is vertically movable by the elastic body.

### Advantageous Effects of Invention

According to the invention, it is possible to reduce vibration of the sample carrier that occurs when the sample carrier is stopped, as compared with the related art. Problems, configurations, and effects other than those described above will be clarified by description of the following embodiment.

### Brief Description of Drawings

FIG. 1 is a plan view illustrating an overall configuration of a sample analysis system provided with a conveyance device according to an embodiment.
FIG. 2 is a configuration diagram of the conveyance device according to the embodiment.
FIG. 3 is a configuration diagram of the conveyance device according to the embodiment.
FIG. 4 is a configuration diagram of the conveyance device according to the embodiment.
FIG. 5 is another configuration diagram of the conveyance device according to the embodiment.
FIG. 6 is still another configuration diagram of the conveyance device according to the embodiment.
FIG. 7 is a graph illustrating an example of a current application pattern in the conveyance device according to the embodiment.
FIG. 8 is a graph illustrating a verification result of the conveyance device according to the embodiment.

### Description of Embodiments

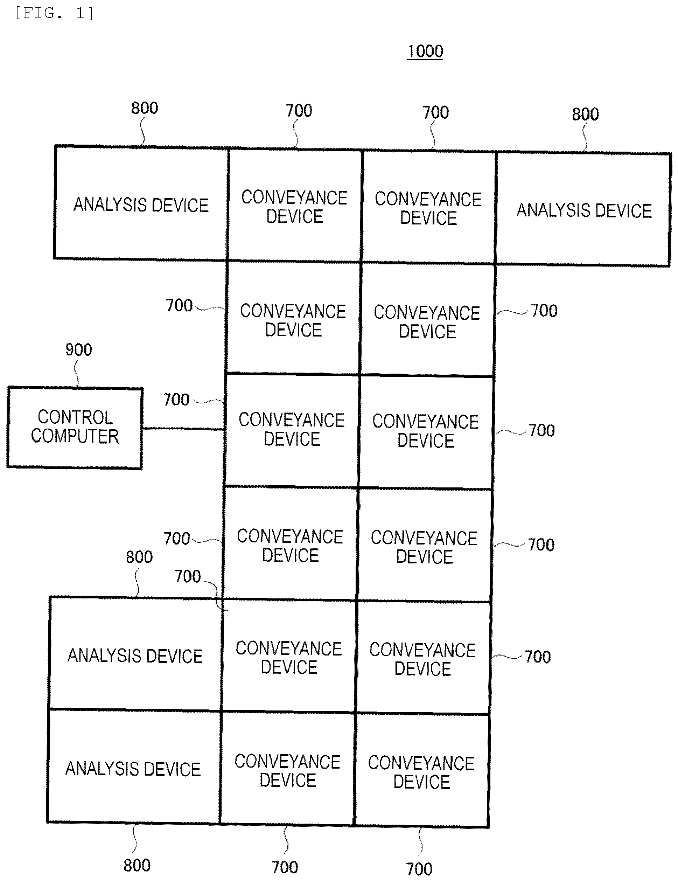

A sample carrier, a conveyance device, and a method for conveying a sample carrier according to the embodiment of the invention will be described with reference to FIGS. 1 to 8.

In the following embodiment, it is needless to mention that components (also including element steps and the like) thereof are not necessarily essential unless otherwise specified or unless clearly considered to be essential in principle.

In all drawings for describing the embodiment, the same members are denoted by the same reference signs in principle, and the repeated description thereof is basically omitted.

First, an overall configuration of a sample inspection automation system will be described with reference to FIG. 1. FIG. 1 is a plan view illustrating an overall configuration of a sample analysis system including a conveyance device according to the embodiment.

A sample inspection automation system 1000 in the present embodiment illustrated in FIG. 1 is a system including an analysis device for automatically analyzing components in a sample such as blood and urine.

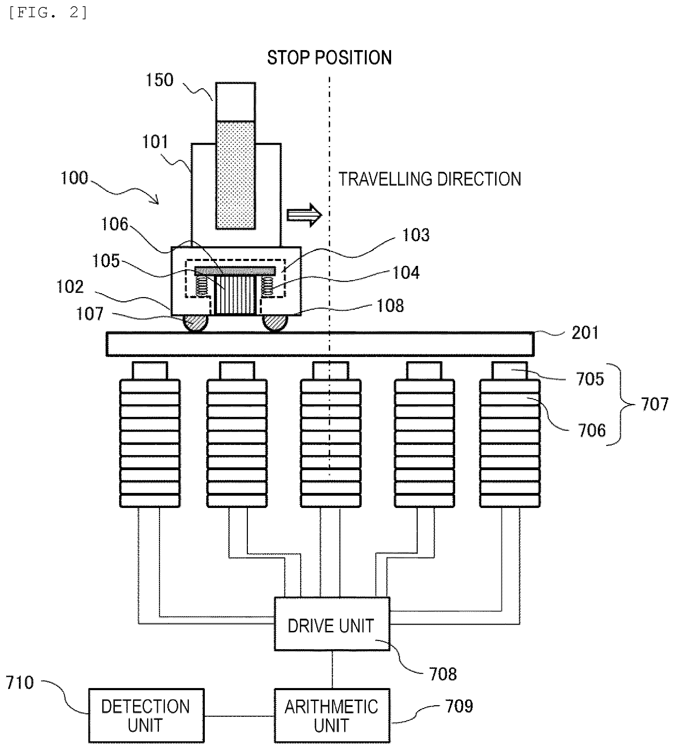

Main components of the sample inspection automation system 1000 are a plurality of conveyance devices 700 (twelve in FIG. 1) for conveying a sample carrier 100 (see FIG. 2) on which a sample container 150 (see FIG. 2) containing a sample is mounted or the empty sample carrier 100 on which the sample container 150 is not mounted to a predetermined destination, a plurality of analysis devices 800 (four in FIG. 1), and a control computer 900 for integrally managing the sample inspection automation system 1000.

The analysis device 800 is a unit that performs qualitative and quantitative analysis on components in the sample conveyed by the conveyance device 700. Analysis items in the unit are not particularly limited, and a configuration of a known automatic analysis device for analyzing biochemical items and immune items can be adopted. Further, when a plurality of analysis devices are provided, specifications may be the same as or different from each other, and are not particularly limited.

Each of the conveyance devices 700 is a device that conveys the sample container 150 containing the sample mounted on the sample carrier 100 to a destination (the analysis device 800, an outlet, or the like) by sliding on a conveyance path by interaction between a magnetic pole 707 (see FIG. 2) and the magnetic body 105 (see FIG. 2) provided in the sample carrier 100. Details thereof will be described with reference to FIG. 2 and subsequent drawings.

The control computer 900 controls operations of the entire system including the conveyance devices 700 and the analysis devices 800, and is implemented by a computer including a display device such as a liquid crystal display, an input device, a storage device, a CPU, a memory, and the like. The operations of the devices are controlled by the control computer 900 based on various programs recorded in the storage device.

Operation control processing executed by the control computer 900 may be integrated into one program, may be divided into a plurality of programs, or may be a combination thereof. A part or all of the program may be implemented by dedicated hardware or may be modularized.

FIG. 1 illustrates a case where four analysis devices 800 are provided, and the number of analysis devices is not particularly limited and can be one or more. Similarly, the number of conveyance devices 700 is not particularly limited and can be one or more.

The sample inspection automation system 1000 may be provided with various types of sample pre-processing and post-processing units that perform pre-processing and post-processing on the sample. A detailed configuration of the sample pre-processing and post-processing unit is not particularly limited, and a configuration of a known pre-processing device can be adopted.

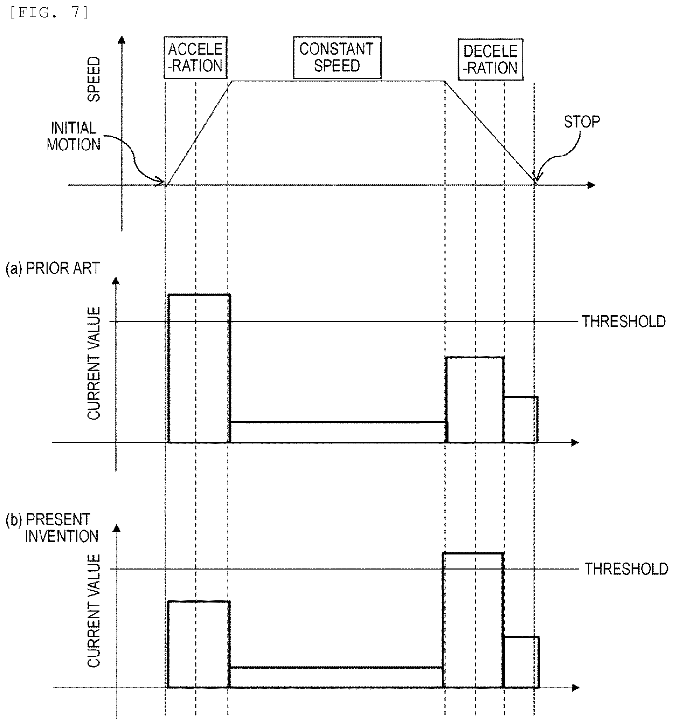

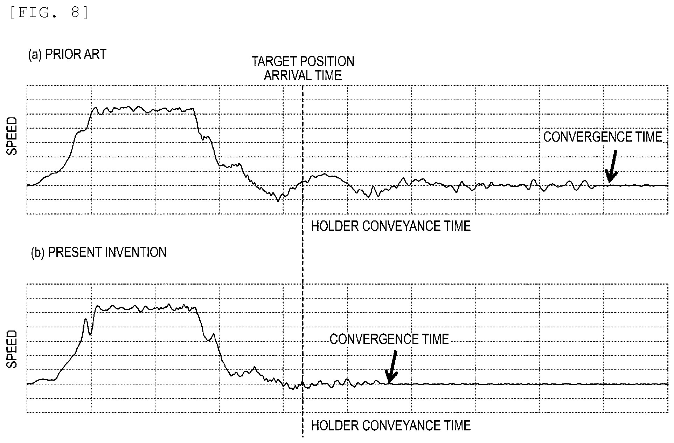

Next, a configuration of the conveyance device 700 in the present embodiment will be described with reference to FIGS. 2 to 8. FIGS. 2 to 6 are configuration diagrams of the conveyance device according to the embodiment, FIG. 7 is a diagram illustrating an example of a current application pattern in the conveyance device according to the embodiment, and FIG. 8 is a diagram illustrating a verification result of the conveyance device according to the embodiment.

As illustrated in FIG. 2, a sample to be inspected in the sample inspection automation system 1000 is handled while being collected and contained in the sample container 150. The sample container 150 is inserted into the sample carrier 100 manually by an operator or by an automatic insertion unit, conveyed in the system, and subjected to various types of processing such as pre-processing and analysis.

As illustrated in FIG. 2, one or more sample carriers 100 that grip the sample container 150 containing a sample and are conveyed by electromagnetic force are provided in the conveyance device 700, and each of the sample carrier 100 includes the magnetic body 105, a gripping part 101 that supports the sample container 150, a bottom part inner space 103 provided in a holder bottom part 102, an elastic body 104, a support member of magnetic body 106, and a rotating body 107.

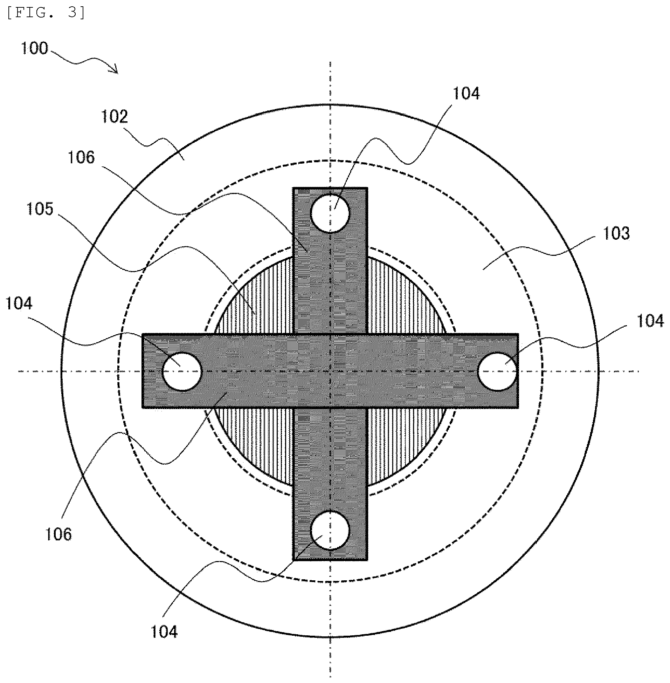

As illustrated in FIGS. 2 and 3, the magnetic body 105 is supported to be vertically movable via four elastic bodies 104 and the cross-shaped support member of magnetic body 106 in the bottom part inner space 103 provided in the holder bottom part 102 of each of the plurality of sample carriers 100. The sample carrier 100 is conveyed by electromagnetic force acting on the magnetic body 105.

The magnetic body 105 is formed of, for example, a permanent magnet such as neodymium or ferrite, but can be formed of another magnet or a magnetic body, and can be formed of an appropriate combination thereof.

As illustrated in FIG. 2, the magnetic body 105 is supported so as not to come into contact with a conveyance surface 201 for conveying the sample carrier 100 at the time of steady conveyance, non-conveyance, or start of conveyance (acceleration). In order to further shorten a convergence time of vibration at the time of stopping the sample carrier 100, it is effective to reduce a distance between the magnetic body 105 and the conveyance surface 201, more preferably to bring the magnetic body 105 and the conveyance surface 201 into contact with each other, in order to extremely increase friction. In contrast, wear due to contact becomes an issue, and conveying force greater than necessary is required, so it is effective to prevent contact between the magnetic body 105 and the conveyance surface 201 except at the time of stopping.

However, considering a change in a shape of the magnetic body 105, it is desirable to support the magnetic body 105 so that the magnetic body 105 does not come into contact with the conveyance surface 201 for conveying the sample carrier 100 at the time of steady conveyance, non-conveyance, or acceleration as described above because it is not easy to desirably change the shape of the magnetic body 105 that is mass-produced in terms of cost.

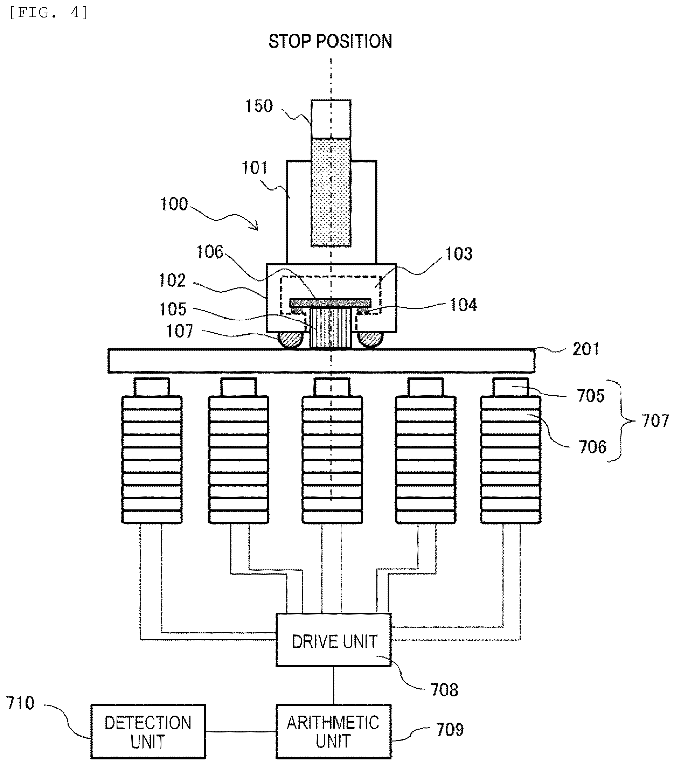

In contrast, as illustrated in FIG. 4, when magnetic force is applied by the electromagnetic force from the magnetic pole 707 at the time of reaching immediately before a stop target position, the magnetic body 105 is vertically movable by the elastic body 104, and therefore it is desirable that the magnetic body 105 is lowered and suitably comes into contact with the conveyance surface 201 for conveying the sample carrier 100.

The elastic body 104 is interposed between the magnetic body 105 and the holder bottom part 102 of the sample carrier 100 as described above, and supports the magnetic body 105 so as to be vertically movable.

The elastic body 104 may be contracted by force that attracts the magnetic body 105 to the magnetic pole 707, and the number thereof may be one or more. In FIG. 3, four are illustrated, but the invention is not limited thereto. In order to reduce a possibility that even a part of the magnetic body 105 comes into contact with the conveyance surface 201 as much as possible at a timing other than a stop time, it is desirable to support the magnetic body 105 parallel to the conveyance surface 201, and for this purpose, it is desirable to have at least three or more.

The elastic body 104 is preferably either a coil spring or a leaf spring, and is not particularly limited thereto.

The elastic body 104 is preferably a non-magnetic body. Examples of the non-magnetic body include a predetermined SUS. In a case of a metal such as the SUS, since rigidity is high, there is an advantage that durability is high and a life of the sample carrier 100 can be extended.

Since the magnetic body 105 is mostly disposed around a central axis of the sample carrier 100, the elastic body 104 is disposed on an outer periphery thereof. The number of elastic bodies 104 to be disposed is limited due to space, cost, and the like, and there is a regrettable effect of anisotropy. Here, in the present embodiment, the magnetic body 105 is brought close to the conveyance surface by excitation to a coil when stopped, but in a case where the elastic body 104 is a magnetic body at that time, the elastic body 104 may also be attracted to the magnetic pole 707, and there is room for further stabilization of stopping of the sample carrier 100. In contrast, when the elastic body 104 is a non-magnetic body, the sample carrier 100 can be stopped more stably.

As illustrated in FIG. 3, the plurality of rotating bodies 107 are disposed on a bottom surface 108 of the sample carrier 100 so as to come into contact with the conveyance surface 201 for conveying the sample carrier 100, and rotate as the sample carrier 100 moves.

The rotating body 107 is a non-magnetic body. The rotating body 107 is configured to be rotatable in multiple directions, and is implemented by, for example, any of a ball roller, an omni wheel, and a caster.

The number of the rotating bodies 107 may be one or more as long as the rotating bodies 107 do not hinder self-standing of the sample carrier 100. Since maintaining the central axis of the sample container 150 perpendicular to the conveyance surface 201 leads to further stable conveyance, when only the rotating body 107 is in contact with the conveyance surface 201, three or more rotating bodies 107 are desired.

When the plurality of rotating bodies 107 are provided, specifications of each are not particularly limited, but in order to maintain the central axis of the sample container 150 perpendicular to the conveyance surface 201 and achieve more stable conveyance, as illustrated in FIG. 2, it is desirable that the specifications are the same such that a lower end portion of the rotating body 107 that is in contact with the conveyance surface 201 maintains the central axis of the sample container 150 perpendicular to the conveyance surface 201, or that a size and other specifications are determined such that an imaginary surface formed by a contact point with the conveyance surface 201 is perpendicular to the central axis of the sample container 150.

In the sample carrier 100, the rotating body 107 is not essential, and the bottom surface 108 and the conveyance surface 201 can be in direct contact with each other to convey the sample carrier 100, but in the invention, since stop control can be performed with higher accuracy than in the related art, it is desirable to provide the rotating body 107 on the bottom surface, which has a further large advantage other than at the time of stopping.

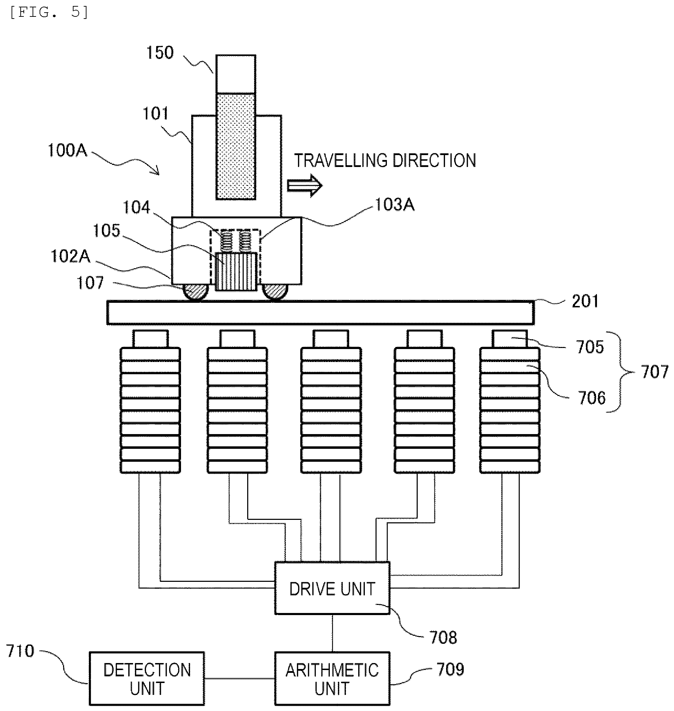

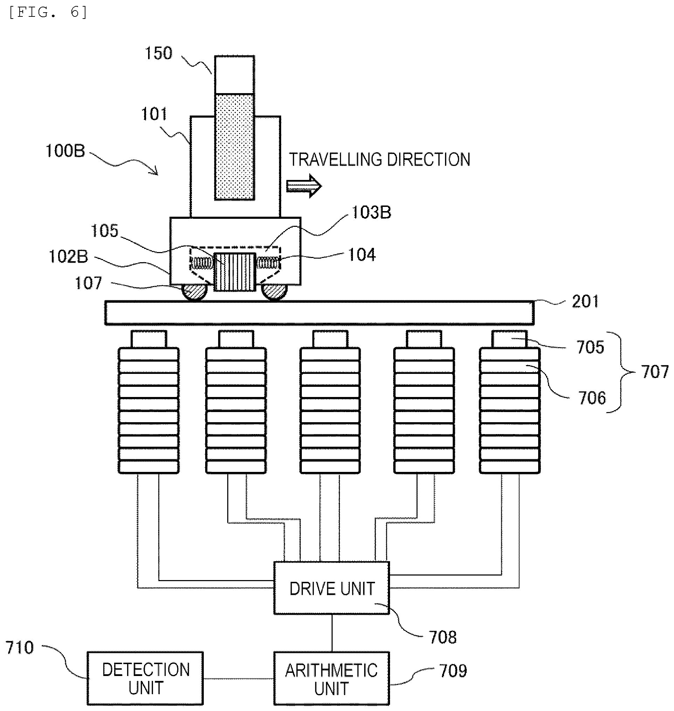

Next, another embodiment of the sample carrier will be described with reference to FIGS. 5 and 6.

A sample carrier 100A illustrated in FIG. 5 has a form in which the magnetic body 105 is suspended by the elastic body 104 from a top surface of a bottom part inner space 103A of a holder bottom part 102A without the support member of magnetic body 106.

Similarly to FIG. 5, a sample carrier 100B illustrated in FIG. 6 does not have the support member of magnetic body 106, and the magnetic body 105 is held by the elastic body 104 against a side surface of a bottom part inner space 103B of a holder bottom part 102B.

In FIGS. 5 and 6 as well, when magnetic force is applied by the electromagnetic force from the magnetic pole 707 at the time of reaching immediately before the stop target position, the magnetic body 105 is vertically movable by the elastic body 104, and therefore it is desirable that the magnetic body 105 is lowered and suitably comes into contact with the conveyance surface 201 for conveying the sample carrier 100.

Returning to FIG. 2, the sample carrier 100 having the magnetic body 105 moves so as to slide on the conveyance surface 201. In order to generate the conveying force, a plurality of magnetic poles 707 including a columnar core 705 and a coil 706 wound around an outer periphery of the core 705 are provided below the conveyance surface 201. The magnetic pole 707 constitutes each of a plurality of detection points for detecting a position of the magnetic body 105. The magnetic pole 707 and the conveyance surface 201 constitute a conveyance path for conveying the sample carriers 100, 100A and 100B by applying magnetic force to the magnetic body 105.

The conveyance surface 201 is formed of a flat surface having small frictional force, and the sample carrier 100 slides on an upper surface thereof.

In the conveyance device 700 in the present embodiment, the plurality of magnetic poles 707 provided inside the conveyance device 700 are responsible for position detection of the magnetic body 105 and conveyance of the magnetic body 105, that is, conveyance of the sample.

A drive unit 708 that applies a predetermined voltage to the magnetic pole 707 to cause a predetermined current to flow through the coil 706 is connected to the magnetic pole 707. The magnetic pole 707 to which a voltage is applied by the drive unit 708 functions as an electromagnet and attracts the magnetic body 105 of the sample carrier 100 on the conveyance surface 201. After the sample carrier 100 is attracted by the magnetic pole 707, the voltage application to the magnetic pole 707 is stopped by the drive unit 708, and the voltage is applied to the different magnetic pole 707 adjacent to the magnetic pole 707 by the drive unit 708 in the same manner as described above, thereby attracting the magnetic body 105 in the sample carrier 100 to the adjacent magnetic pole 707.

By repeating this procedure for all the magnetic poles 707 constituting the conveyance path, the sample contained in the sample container 150 mounted on the sample carrier 100 provided with the magnetic body 105 is conveyed to a destination.

An arithmetic unit 709 calculates a current flowing through the coil 706 using various types of information such as position information, speed information, and weight information of the sample carrier 100, and outputs a command signal to the drive unit 708. The drive unit 708 applies a voltage to the corresponding coil 706 based on the command signal.

In particular, as illustrated in FIG. 7, the arithmetic unit 709 in the present embodiment generates larger magnetic force during stop control of the sample carriers 100, 100A and 100B than during acceleration control or steady conveyance control of the sample carriers 100, 100A and 100B.

As illustrated in FIG. 7, in the related art, the largest current is applied to the coil 706 during the acceleration control in order to move from a stopped state, whereas in the present embodiment, it is desirable to apply the largest current to the coil 706 during the stop control in order to smoothly stop.

As illustrated in FIG. 7, it is desirable that the arithmetic unit 709 generates magnetic force having a magnitude that deforms the elastic body 104 (exceeds a threshold at which the elastic body 104 that supports the magnetic body 105 starts to contract) such that the magnetic body 105 comes into contact with the conveyance path during the stop control of the sample carriers 100, 100A and 100B.

In contrast, it is desirable that the arithmetic unit 709 generates magnetic force having a magnitude that does not deform the elastic body 104 (the elastic body 104 that supports the magnetic body 105 does not contract or falls below the threshold) during the acceleration control and steady conveyance control of the sample carriers 100, 100A and 100B.

A verification result is illustrated in FIG. 8**.** Since the elastic body 104 that is interposed between the magnetic body 105 and the holder bottom parts 102, 102A and 102B of the sample carriers 100, 100A and 100B and supports the magnetic body 105 is provided, and the magnetic body 105 is vertically movable by the elastic body 104, a stop time of vibration when the sample carriers 100, 100A and 100B are stopped can be shortened to about 1/3 as compared with the related art, and thus it is possible to quickly transition to a next conveyance operation and to greatly reduce liquid shaking of the sample in the sample container 150 as compared with the related art.

Returning to FIG. 2, a configuration of a detection unit 710 is not particularly limited as long as the detection unit 710 can detect a position of the sample container 150. For example, the position of the sample container 150 can be directly measured using a Hall sensor that detects a magnetic flux of the magnetic body 105 of the sample container 150, a length measuring device, or the like. Further, the position of the sample container 150 can be indirectly obtained by detecting a current flowing through the coil 706 of the magnetic pole 707 and a manner in which the current flows to obtain the position of the magnetic body 105.

Next, effects of the present embodiment will be described.

The sample carriers 100, 100A and 100B in the present embodiment described above that grip the sample container containing the sample and is conveyed by electromagnetic force include: the magnetic body 105; and the elastic body 104 interposed between the magnetic body 105 and the holder bottom parts 102, 102A and 102B of the sample carriers 100, 100A and 100B and supporting the magnetic body 105, and the magnetic body 105 is vertically movable by the elastic body 104.

In this way, since the magnetic body 105 is lowered perpendicularly to the conveyance surface by the elastic body 104, a relative distance between the magnetic body 105 and the magnetic pole 707 can be reduced to increase the magnetic force applied to the magnetic body 105, so that stopping force can be increased, and preferably, friction between the sample carriers 100, 100A and 100B and the conveyance surface 201 can be increased, so that the sample carriers can be stopped more smoothly than in the related art, and vibration at the time of stopping can be reduced. Therefore, by reducing the vibration at the time of stopping, it is possible to shorten a convergence time, which is a time when a next operation of sample carriers 100, 100A and 100B can be started. Accordingly, it is possible to increase a distance over which the sample carriers 100, 100A and 100B can be conveyed per unit time. Although depending on a lowering distance of the magnetic body 105, a material and a surface shape of the magnetic body 105, and a material and a surface shape of the conveyance surface 201, by lowering the magnetic body 105, it is possible to reduce the convergence time to about half of that when processing is not performed.

In addition, since the elastic body 104 is either a coil spring or a leaf spring, the elastic body 104 can be easily procured, and thus the sample carriers 100, 100A and 100B can be easily manufactured.

Further, since the elastic body 104 is a non-magnetic body, the sample carriers 100, 100A and 100B can be stopped more stably.

In addition, since the elastic body 104 supports the magnetic body 105 so as not to come into contact with the conveyance surface 201 that conveys the sample carriers 100, 100A and 100B, it is possible to prevent wear due to contact between the magnetic body 105 and the conveyance surface 201, and to use the sample carriers 100, 100A and 100B for a long period of time.

Further, in the present embodiment, since the sample carriers 100, 100A and 100B can be stopped with higher accuracy than lightning reception, by further providing the rotating body 107 that is in contact with the conveyance surface 201 for conveyance and rotates as the sample carriers 100, 100A and 100B move, it is possible to provide a more suitable configuration when the rotating body 107 is provided in order to further facilitate conveyance during the acceleration control or the steady conveyance. That is, by providing the rotating body 107, it is possible to reduce an applied current value during the acceleration control or during the steady conveyance compared with a case where the applied current value is not provided, and thus it is possible to achieve power saving or the like.

In addition, the conveyance path generates larger magnetic force during the stop control of the sample carriers 100, 100A and 100B than during the acceleration control of the sample carriers 100, 100A and 100B, or generates larger magnetic force during the stop control of the sample carriers 100, 100A and 100B than during the steady conveyance control of the sample carriers 100, 100A and 100B, so that the magnetic body 105 can be lowered at a timing at which there is a request for bringing the magnetic body 105 closer to the conveyance surface 201, and the magnetic body 105 can be prevented from being lowered at a timing at which there is no request for bringing the magnetic body 105 closer to the conveyance surface 201, a chance of contact between the magnetic body 105 and the conveyance surface 201 can be reduced as much as possible, and wear can be further reduced.

Further, the conveyance path generates magnetic force having a magnitude that deforms the elastic body 104 so that the magnetic body 105 comes into contact with the conveyance path during the stop control of the sample carriers 100, 100A and 100B, so that the magnetic body 105 can be lowered only at a minimum necessary timing, the stop control can be reliably performed, the chance of contact between the magnetic body 105 and the conveyance surface 201 can be reduced as much as possible, and wear can be further reduced.

In addition, even when the conveyance path generates magnetic force having a magnitude that does not deform the elastic body 104 during the acceleration control and the steady conveyance control of the sample carriers 100, 100A, and 100B, the magnetic body 105 can be lowered only at a minimum necessary timing, and the chance of contact between the magnetic body 105 and the conveyance surface 201 can be reduced as much as possible, and wear can be further reduced.

### <Others>

The invention is not limited to the embodiment described above, and various modifications and applications are possible. The embodiment described above is described in detail for easy understanding of the invention, and is not necessarily limited to including all the configurations described above.

### Reference Signs List

100, 100A, 100B: sample carrier,
101: gripping part,
102, 102A, 102B: holder bottom part (casing),
103, 103A, 103B: bottom part inner space,
104: elastic body,
105: magnetic body,
106: support member of magnetic body,
107: rotating body,
108: bottom surface,
150: sample container,
201: conveyance surface,
700: conveyance device,
705: core,
706: coil,
707: magnetic pole,
708: drive unit,
709: arithmetic unit,
710: detection unit,
800: analysis device,
900: control computer,
1000: sample inspection automation system.

## Claims

1. A sample carrier that grips a sample container containing a sample and is conveyed by electromagnetic force, comprising:
a magnetic body; and
an elastic body interposed between the magnetic body and a casing of the sample carrier and supporting the magnetic body, wherein
the magnetic body is vertically movable by the elastic body.

2. The sample carrier according to claim 1, wherein
the elastic body is one of a coil spring or a leaf spring.

3. The sample carrier according to claim 1, wherein
the elastic body is a non-magnetic body.

4. The sample carrier according to claim 1, wherein
the elastic body supports the magnetic body so as not to come into contact with a conveyance surface for conveying the sample carrier.

5. The sample carrier according to claim 1, further comprising:
a rotating body that contacts a conveyance surface for conveying the sample carrier and that rotates as the sample carrier moves.

6. A conveyance device comprising:
a sample carrier with a magnetic material; and
a conveyance path for conveying the sample carrier by applying magnetic force to the magnetic body, wherein
the sample carrier includes
an elastic body interposed between the magnetic body and a casing of the sample carrier and supporting the magnetic body so as to be vertically movable.

7. The conveyance device according to claim 6, wherein
the conveyance path generates larger magnetic force during stop control of the sample carrier than during acceleration control of the sample carrier.

8. The conveyance device according to claim 6, wherein
the conveyance path generates larger magnetic force during stop control of the sample carrier than during steady conveyance control of the sample carrier.

9. The conveyance device according to claim 7 or 8, wherein
the conveyance path generates magnetic force having a magnitude that deforms the elastic body so that the magnetic body comes into contact with the conveyance path during the stop control of the sample carrier.

10. The conveyance device according to claim 7 or 8, wherein
the conveyance path generates magnetic force having a magnitude that does not deform the elastic body during the acceleration control and the steady conveyance control of the sample carrier.

11. A method for conveying a sample carrier provided with a magnetic body, comprising:
supporting the magnetic body of the sample carrier by an elastic body so as to be vertically movable; and
conveying the sample carrier by providing magnetic force to the magnetic body.
